# EUROPÄISCHE PATENTSCHRIFT

(11) **EP 3 707 405 B1**
(45) Veröffentlichungstag und Bekanntmachung des Hinweises auf die Patenterteilung: **14.07.2021**
(21) Anmeldenummer: 18803592.7
(22) Anmeldetag: 08.11.2018
(51) Int. Cl.: F16D 65/10

(54) **BREMSTROMMEL FÜR EINE TROMMELBREMSE EINES FAHRZEUGS**
BRAKE DRUM FOR A VEHICLE DRUM BRAKE
TAMBOUR DE FREIN POUR UN FREIN À TAMBOUR D'UN VÉHICULE

(30) Priorität: 09.11.2017 DE 102017219924
(43) Veröffentlichungstag der Anmeldung: 16.09.2020
(73) Patentinhaber: Robert Bosch GmbH, 70442 Stuttgart (DE)
(72) Erfinder: HUSCHENHOEFER, Wolfgang, 35614 Asslar (DE); BAHROUN, Karim, 72663 Grossbettlingen (DE)
(86) Internationale Anmeldenummer: PCT/EP2018/080555
(87) Internationale Veröffentlichungsnummer: WO 2019/092071

(56) Entgegenhaltungen:
- EP-A1- 0 490 021
- DE-A1-102009 017 295
- DE-A1-102013 201 911
- DE-A1-102015 212 017
- DE-U1-202011 100 166

## Beschreibung

Die Erfindung betrifft eine Bremstrommel für eine Trommelbremse, insbesondere eines Kraftfahrzeugs, aufweisend einen zylinderförmigen Mantel und einen sich daran axial anschließenden Trägertopf, wobei der Trägertopf einen Nabenringabschnitt zur Befestigung an einer Radnabe aufweist.

Ferner betrifft die Erfindung eine Trommelbremseinrichtung für eine Radbremse eines Fahrzeugs, insbesondere Kraftfahrzeugs.

### Stand der Technik

Bremstrommeln sind aus dem Stand der Technik bereits bekannt. Trommelbremsen sind Reibungsbremsen, bei denen Bremsbeläge auf eine zylindrische Fläche, das heißt die Bremstrommel, wirken. Die Bremstrommel ist ein topfförmiger Metallkörper, der fest an der Radnabe von Fahrzeugen, insbesondere Kraftfahrzeugen, anbringbar beziehungsweise angebracht ist. Durch Betätigen der Bremse wird ein Bremsbelag im Wesentlichen radial von innen in Richtung der mit dem Rad umlaufenden Bremstrommel gedrückt und so die Bewegungsenergie abgebaut und in Wärme umgewandelt. Die entstehende Wärme wird von der Bremstrommel aufgenommen und an die Umgebungsluft abgegeben. Aufgrund der steigenden Anforderungen in Bezug auf den Kraftstoffverbrauch und Belastbarkeit ist man darin bestrebt, Gewichtseinsparungen auch an den Bremsen von Fahrzeugen, insbesondere Kraftfahrzeugen, vorzunehmen. Entsprechend besteht der Wunsch, möglichst leichte Materialien zu verwenden.

Die Druckschrift DE 10 2013 201 911 A1 offenbart ein Verfahren zur Herstellung eines Faserkunststoffverbundbauteils, das zumindest teilweise aus einem endlos faserverstärkten Faserkunststoffverbund besteht. Aus der Offenlegungsschrift DE 10 2009 017 295 A1 geht ein Bremstopf hervor, der zumindest teilweise aus einer faserverstärkten Kunststoffmatrix gebildet ist. Die europäische Patentanmeldung EP 0 490 021 A1 offenbart eine aus Grauguss gefertigte Bremstrommel, deren Mantel durch darin eingearbeitete Stahlstreben verstärkt ist.

### Offenbarung der Erfindung

Die erfindungsgemäße Bremstrommel mit den Merkmalen des Anspruchs 1 hat den Vorteil, dass die Bremstrommel bei einem geringen Gewicht eine ausreichend hohe Belastbarkeit für Anwendungen auch in Personenfahrzeugen gewährleistet. Diese Gewichtsreduzierung durch die erfindungsgemäße Bremstrommel wirkt sich direkt auf die ungefederte Masse aus, da die Bremstrommel zu den ungefederten Massen eines Fahrzeugs gehört, und verbessert somit die Fahrleistungen des Fahrzeugs und erhöht insbesondere die Sicherheit. Durch die erfindungsgemäße Bremstrommel wird insbesondere ein geringes Gewicht in einfacher und kostengünstiger Art und Weise erzielt. Hierzu ist vorgesehen, dass die einstückig ausgebildete Bremstrommel zumindest teilweise aus einem faserverstärkten Kunststoff (FVK) gebildet ist. Durch die Bildung der Bremstrommel aus faserverstärktem Kunststoff und der daraus resultierenden Gewichtsreduzierung wird nicht nur eine Verbesserung der Fahreigenschaften erreicht, sondern auch eine Senkung des Kraftstoffverbrauchs. Für den faserverstärkten Kunststoff ist bevorzugt vorgesehen, dass die Bremstrommel aus einem faserverstärkten, insbesondere hochtemperaturfesten, Kunststoff gefertigt ist, der mehrere Faserschichten mit jeweils einer Vielzahl von Fasern aufweist, wobei die Fasern von zumindest zwei benachbarten Schichten unterschiedlich zueinander ausgerichtet sind. Durch die unterschiedlich ausgerichteten Faserschichten wird eine hohe mechanische Belastbarkeit der Bremstrommel bei geringem Gewicht gewährleistet. Durch die Wahl eines hochtemperaturfesten Kunststoffs wird auch bei Temperaturen oberhalb von 150°C die Formstabilität der Bremstrommel und somit die optimale Krafteinleitung in die Fasern gewährleistet. Außerdem ist die Herstellung von faserverstärktem Kunststoff in den letzten Jahren kostengünstiger geworden, sodass die vorteilhafte Ausgestaltung der Bremstrommel nicht zu nennenswerten Kostennachteilen führt.

In einer bevorzugten Ausführungsform ist vorgesehen, dass die Bremstrommel vollständig aus einem faserverstärkten Kunststoff gebildet ist. Dies hat den Vorteil, dass der Effekt der Gewichtsreduzierung noch weiter gesteigert wird und damit einhergehend der Kraftstoffverbrauch weiter gesenkt wird. Ferner wird durch die zusätzliche Gewichtsreduzierung das Fahrverhalten des Fahrzeugs weiter verbessert. Ferner wird durch die Herstellung der Bremstrommel aus einem einzigen Werkstoff die Herstellung an sich vereinfacht, wodurch wieder Kosten eingespart werden können.

In einer weiteren bevorzugten Ausführungsform ist vorgesehen, dass die Bremstrommel eine oder mehrere sich lastpfadgerecht erstreckende Stützfasern aufweist. Diese Ausführungsform hat den Vorteil, dass die Bremstrommel höheren Belastungen wiederstehen kann. Insbesondere kann durch die lastpfadgerecht ersteckenden Stützfasern erreicht werden, dass an den kritischen Stellen die Bremstrommel unterstützt beziehungsweise verstärkt wird. Besonders vorteilhaft ist es, wenn die Stützfasern derart in der Bremstrommel vorgesehen werden, dass sie zumindest im Wesentlichen nur auf Zug belastet werden. Durch die besonders vorteilhafte Ausnutzung der hohen Stabilität der Stützfasern in Bezug auf Zugbelastungen kann bei besonders geringem Gewicht eine besonders hohe Stabilität der Bremstrommel erreicht werden. Im Zusammenhang mit der vorliegenden Erfindung wird unter dem Ausdruck "lastpfadgerecht erstreckende Stützfaser" eine Stützfaser verstanden, welche in ihrer Längserstreckung sich entlang eines Lastpfads in dem faserverstärkten Kunststoff ausgerichtet und insbesondere eingenäht ist, wobei die Lastpfade in einer Bremstrommel beispielsweise durch Versuche und/oder eine Simulation der Bremstrommel unter Belastung, insbesondere durch einen Bremsvorgang, ermittelt werden.

Erfindungsgemäß ist vorgesehen, dass an einer Innenseite des Mantels ein zylinderförmiger Reibring angeordnet ist. Mit der zusätzlichen Anordnung eines Reibrings in der Bremstrommel ist der Vorteil verbunden, dass unabhängig vom Material der Bremstrommel und dem damit einhergehenden Vorteil des geringen Gewichts ein für die Bremswirkung des Reibring optimal geeignetes Material ausgewählt werden kann.

Erfindungsgemäß ist vorgesehen, dass der Reibring metallische und/oder keramische Komponenten aufweist. Dies hat den Vorteil, dass durch die metallischen und/oder keramischen Komponenten im Reibring die mechanische Stabilität erhöht werden kann. Darüber hinaus haben die keramischen Komponenten zusätzlich den Vorteil, dass sie auch bei hohen Betriebstemperaturen zuverlässig die benötigte Bremswirkung erzielen.

In einer bevorzugten Ausführungsform der Erfindung ist vorgesehen, dass die Bremstrommel zumindest einen radial innen und zumindest einen radial außen liegenden Bereich des Trägertopfs aufweist, wobei der radial innen liegende Bereich zu dem radial außen liegenden Bereich axial versetzt angeordnet ist, und wobei der Trägertopf zwischen dem radial innen liegenden Bereich und dem radial außen liegenden Bereich einen Übergang aufweist, und wobei der Übergang eine Krümmung aufweist. Dies hat den Vorteil, dass durch die Krümmung des Übergangs zwischen axial versetzt angeordneten Bereichen die Fasern im faserverstärkten Kunststoff nicht derart geknickt beziehungsweise verformt werden, dass sie brechen können.

In einer weiteren Ausführungsform der Erfindung ist vorgesehen, dass die Krümmung einen Radius aufweist, der zumindest dem Mindestbiegeradius der Bremstrommel beziehungsweise dem Material der Bremstrommel und/oder der Fasern entspricht oder größer ist, insbesondere doppelt so groß oder mehr. Diese Ausführungsform hat den Vorteil, dass durch die Krümmung ein derartiges Abknicken verhindert wird, wodurch die Fasern und die Bremstrommel selbst brechen können. Der Mindestwinkel ist vorzugsweise von der verwendeten Faser des faserverstärkten Kunststoffs abhängig und der Fachmann kann die diesbezüglichen Informationen, insbesondere den Biegeradius, den Spezifikationen/dem Datenblatt der Fasern entnehmen.

In einer Weiterbildung der Erfindung ist vorgesehen, dass ein Übergang, insbesondere Mantelübergang, von dem zylinderförmigen Mantel in den daran axial anschließenden Trägertopf eine Krümmung aufweist, und wobei insbesondere die Krümmung einen Radius aufweist, der zumindest dem Mindestbiegeradius der Bremstrommel beziehungsweise dem Material der Bremstrommel und/oder der Fasern entspricht oder größer ist, insbesondere doppelt so groß oder mehr. Dies hat unter anderem den Vorteil, dass an der in Bezug auf die Kräfteübertragung kritischen Stelle des Übergangs von Trägertopf in zylinderförmigen Mantel eine derartige Krümmung vorgesehen ist, dass keine der im Bereich des Übergangs vorhandenen Fasern im faserverstärkten Kunststoff derart abgeknickt werden, dass diese brechen. Hierdurch kann an einer für die Funktion der Bremstrommel entscheidenden Stelle gewährleistet werden, dass die Stabilität beziehungsweise die Kräfte durch den Übergang hindurch mittels der enthaltenen Fasern übertragen werden können.

In einer weiteren Ausführungsform der Erfindung ist vorgesehen, dass der Reibring zum Einbetten in die Bremstrommel von dem Material der Bremstrommel zumindest bereichsweise umschlossen, insbesondere umgossen, ist. Dies hat den Vorteil, dass durch das Umgießen beziehungsweise Umschließen des Reibrings mit dem Material der Bremstrommel ein stoffschlüssiger Verbund erhalten wird und darüber hinaus die Bauhöhe gering gehalten werden kann.

In einer weiteren Ausführungsform der Erfindung ist vorgesehen, dass der Reibring durch eine Faseranbindung an der Bremstrommel angebunden ist, wobei die Faseranbindung den Reibring einerseits und die Bremstrommel andererseits verbindet. Durch diese Ausführungsform kann besonders vorteilhaft erreicht werden, dass die Kräfte, welche beim Bremsen von den Bremsbacken auf den Reibring übertragen werden, durch eine bevorzugt zumindest im Wesentlichen nur auf Zug belastete Faseranbindung auf die Bremstrommel übertragen werden kann, wobei bei einem besonders geringen Gewicht ein besonders hohes Maß an Stabilität und Festigkeit erreicht werden kann.

In einer weiteren Ausführungsform der Erfindung ist vorgesehen, dass der Reibring durch eine oder mehrere Haltefasern der Faseranbindung an den faserverstärkten Kunststoff angebunden ist. Ferner ist bevorzugt vorgesehen, dass die eine oder die mehreren Haltefasern sich lastpfadgerecht erstrecken. Im Zusammenhang mit der vorliegenden Erfindung wird unter dem Ausdruck "lastpfadgerecht erstreckende Haltefaser" eine Haltefaser verstanden, welche in ihrer Längserstreckung sich entlang eines Lastpfads in dem faserverstärkten Kunststoff ausgerichtet und insbesondere eingenäht ist, wobei die Lastpfade in einer Bremstrommel beispielsweise durch Versuche und/oder eine Simulation der Bremstrommel unter Belastung, insbesondere durch einen Bremsvorgang, ermittelt werden. Dies hat insbesondere den Vorteil, dass durch die speziell vorgesehenen Haltefasern der Reibring direkt an dem faserverstärkten Kunststoff angebunden wird. Hiermit wird eine direkte Kraftübertragung, vorzugsweise auf Zug, erzielt und somit eine besonders hohe Stabilität der Bremstrommel realisiert.

In einer weiteren Ausführungsform der Erfindung ist vorgesehen, dass der Reibring Kühlrippen aufweist, welche sich radial nach außen erstrecken. In einer weiteren Ausführungsform ist vorgesehen, dass der Reibring Kühlrippen aufweist, welche sich radial nach außen erstrecken, und wobei sich die Kühlrippen durch Durchbrechungen in der Bremstrommel radial nach außen erstrecken. Diese Ausführungsformen haben den Vorteil, dass die bei dem Bremsvorgang entstehende Wärme besonders vorteilhaft nach außen, das heißt außerhalb der Bremstrommel, abgeführt werden kann.

Die Erfindung betrifft weiterhin eine Trommelbremseinrichtung für eine Radbremse eines Fahrzeugs, insbesondere Kraftfahrzeug, mit wenigstens einer Bremstrommel und wenigstens einer in oder an der Bremstrommel verlagerbar angeordneten Bremsbacke, wobei zur Ausführung eines Bremsvorgangs die wenigstens eine Bremsbacke gegen den Mantel der Bremstrommel pressbar ist, zeichnet sich durch die Ausbildung der Bremstrommel nach einem oder mehreren der Ansprüche 1 bis 11 aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand mehrerer Figuren näher erläutert werden. Dazu zeigen:
- Figur 1: eine vorteilhafte Bremstrommel,
- Figur 2: die vorteilhafte Bremstrommel aus Fig. 1 im Querschnitt,
- Figur 3: einen Reibring, wobei dieser eingebettet in der Bremstrommel ist,
- Figur 4: einen Reibring, wobei dieser über eine Faseranbindung mit der Bremstrommel verbunden ist, und
- Figur 5: einen Reibring, wobei dieser Kühlrippen, welche sich radial nach außen erstrecken, aufweist.

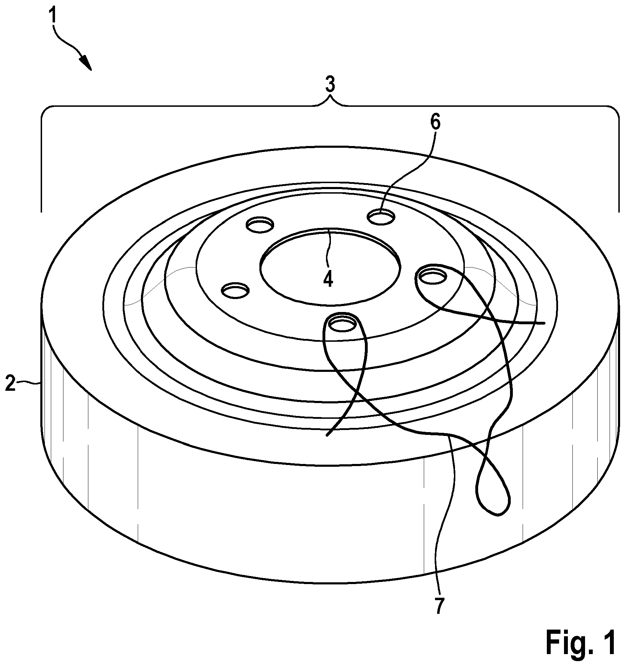

In Figur 1 ist eine vorteilhafte Bremstrommel 1 gezeigt. Die Bremstrommel 1 weist einen zylinderförmigen Mantel 2 sowie ein daran axial anschließenden Trägertopf 3 auf. Die Bremstrommel 1 und insbesondere der zylinderförmige Mantel 2 sowie der daran anschließende Trägertopf 3 sind einstückig zumindest teilweise aus einem faserverstärkten Kunststoff gebildet. Hierdurch wird vorteilhafterweise erreicht, dass die Bremstrommel 1 in ihrem Gewicht deutlich leichter hergestellt werden kann als eine Bremstrommel aus Stahl, wobei durch den faserverstärkten Kunststoff dies bei gleicher Festigkeit und Stabilität gelingt. Radial innenliegend weist der Trägertopf einen Nabenring am Abschnitt zur Befestigung an einer Radnabe 5 (in der Figur 1 nicht gezeigt) auf, wobei zur Befestigung an der Radnabe 5 Durchberechnungen 6 vorgesehen sind. Weiterhin ist in Figur 1 eine Stützfaser 7 gezeigt, welche sich lastpfadgerecht erstreckt. Hierdurch kann insbesondere durch die lastpfadgerecht erstreckende Stützfaser erreicht werden, dass die in dem zylinderförmigen Mantel 2 auftretenden Kräfte während eines Bremsvorgangs auf den Trägertopf 3 und insbesondere den Durchbrechungen 6 übertragen werden können.

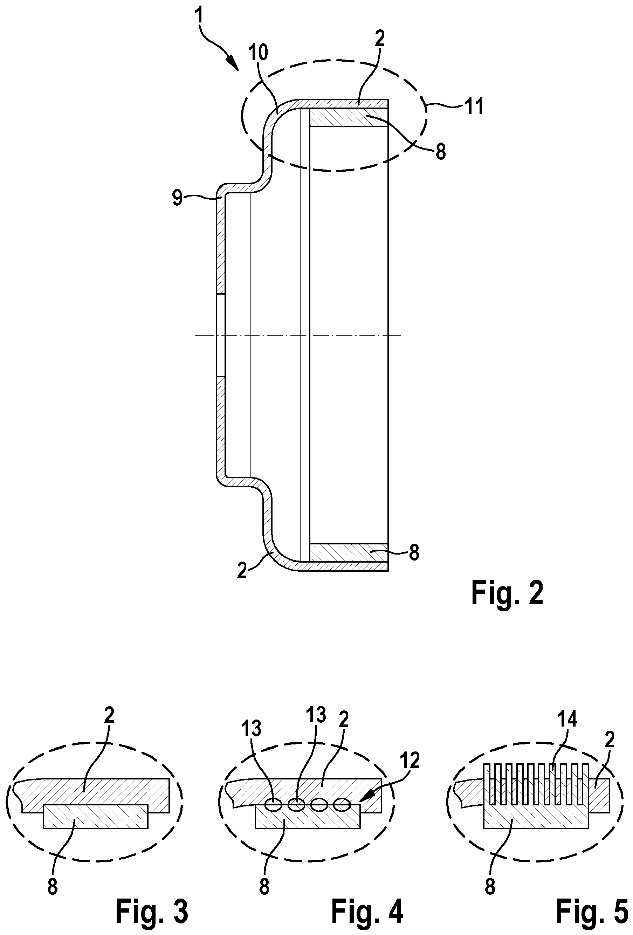

In Figur 2 ist die vorteilhafte Bremstrommel 1 aus Figur 1 im Querschnitt gezeigt, wobei innenliegend in dem zylinderförmigen Mantel 2 ein zylinderförmiger Reibring 8 gezeigt ist. Weiterhin ist in Figur 2 gezeigt, dass der Trägertopf 3 zwischen einem radial innenliegenden Bereich und einem radial außenliegenden Bereich, wobei der radial innenliegende und der radial außenliegende Bereich axial versetzt sind, einen gekrümmten Übergang 9 aufweist. Die gekrümmte Gestaltung des Übergangs 9 hat den Vorteil, dass die im faserverstärkten Kunststoff vorhandenen Fasern nicht durch eine übermäßige Biegung brechen können.

Weiterhin zeigt Figur 2 zwischen dem zylinderförmigen Mantel und dem daran axial anschließenden Trägertopf 3 einen gekrümmten Übergang 10, insbesondere einen gekrümmten Mantelübergang. Auch hier hat der gekrümmte Übergang den Vorteil, dass an einer Stelle, an welcher besonders hohe Kräfte beim Bremsvorgang auftreten, die im faserverstärkten Kunststoff vorhandenen Fasern durch die Krümmung nicht derart abgeknickt werden, dass diese brechen und ihre Funktion der zusätzlichen Verstärkung nicht mehr ausführen können.

Weiterhin ist mit Ausschnitt 11 ein Bereich gekennzeichnet, welcher in den folgenden Figuren 3 bis 5 weitere Details zur Anwendung des Reibrings 8 an die Bremstrommel 1 zeigt.

Gemäß einem weiteren Ausführungsbeispiel ist in Figur 3 der Ausschnitt 11 aus Figur 2 gezeigt, wobei der Reibring 8 in das Material der Bremstrommel 2 eingegossen ist. Hierdurch ergibt sich der Vorteil, dass ein fester, insbesondere stoffschlüssiger, Verbund zwischen der Bremstrommel 2 und dem Reibring 8 entsteht.

Gemäß einem weiteren Ausführungsbeispiel ist in Figur 4 ebenfalls der Ausschnitt 11 aus Figur 2 gezeigt, wobei der Reibring 8 an dem faserverstärkten Kunststoff mittels einer Faseranbindung 12 an die Bremstrommel 2 angebunden ist, und wobei zusätzlich Haltefasern 13 zur Anbindung an den faserverstärkten Kunststoff eingebracht sind. Dies hat den Vorteil, dass durch die Faseranbindung 12 und die zusätzlichen Haltefasern 13 ein besonders stabiler Verbund zwischen Bremstrommel 1, insbesondere dem zylinderförmigen Mantel 2, erreicht werden kann, sodass die in den Reibring 8 eingebrachten Kräfte während eines Bremsvorgangs optimal auf die Bremstrommel 2 und damit auf die Radnabe 5 (hier in Figur 4 nicht gezeigt) übertragen werden kann.

Gemäß einem weiteren Ausführungsbeispiel ist in Figur 5 ebenfalls der Ausschnitt 11 aus Figur 2 gezeigt, wobei der Reibring 8 nach außen sich erstreckende Kühlrippen 14 aufweist. Dies hat insbesondere den Vorteil, dass die während des Bremsvorgangs am Reibring 8 entstehende Wärme optimal nach außen über die Kühlrippen 14 an die Umgebungsluft abgegeben werden kann.

## Patentansprüche

1. Bremstrommel (1) für eine Trommelbremse, insbesondere eines Kraftfahrzeugs, aufweisend einen zylinderförmigen Mantel (2) und einen sich daran axial anschließenden Trägertopf (3), wobei der Trägertopf (3) einen Nabenringabschnitt (4) zur Befestigung an einer Radnabe (5) aufweist, wobei an einer Innenseite des Mantels (2) ein zylinderförmiger Reibring (8) angeordnet ist **dadurch gekennzeichnet, dass** die einstückig ausgebildete Bremstrommel (1) zumindest teilweise aus einem faserverstärkten Kunststoff gebildet ist, wobei der Reibring (8) metallische und/oder keramische Komponenten aufweist.

2. Bremstrommel (1) nach Anspruch 1, **dadurch gekennzeichnet, dass** die Bremstrommel (1) vollständig aus einem faserverstärkten Kunststoff gebildet ist.

3. Bremstrommel (1) nach Anspruch 1 oder 2, **dadurch gekennzeichnet, dass** die Bremstrommel (1) eine oder mehrere sich lastpfadgerecht erstreckende Stützfasern (7) aufweist.

4. Bremstrommel (1) nach einem der vorhergehenden Ansprüche, **dadurch gekennzeichnet, dass** die Bremstrommel (1) zumindest einen radial innen und zumindest einen radial außen liegenden Bereich des Trägertopfs (3) aufweist, wobei der radial innen liegende Bereich zu dem radial außen liegenden Bereich axial versetzt angeordnet ist, und wobei der Trägertopf (3) zwischen dem radial innen liegenden Bereich und dem radial außen liegenden Bereich einen Übergang (9) aufweist, und wobei der Übergang (9) eine Krümmung aufweist.

5. Bremstrommel (1) nach Anspruch 4, **dadurch gekennzeichnet, dass** die Krümmung einen Radius von mindestens 2 mm, bevorzugt mindestens 4 mm, besonders bevorzugt mindestens 6 mm, aufweist.

6. Bremstrommel (1) nach einem der vorhergehenden Ansprüche, **dadurch gekennzeichnet, dass** ein Übergang (10), insbesondere Mantelübergang, von dem zylinderförmigen Mantel (2) in den daran axial anschließenden Trägertopf (3) eine Krümmung aufweist, und wobei insbesondere die Krümmung einen Radius von mindestens 2 mm, bevorzugt mindestens 4 mm, besonders bevorzugt mindestens 6 mm, aufweist.

7. Bremstrommel (1) nach einem der vorhergehenden Ansprüche, **dadurch gekennzeichnet, dass** der Reibring (8) zum einbetten in die Bremstrommel (1) von dem Material der Bremstrommel (1) zumindest bereichsweise umschlossen, insbesondere umgossen, ist.

8. Bremstrommel (1) nach einem der Ansprüche 1 bis 3, **dadurch gekennzeichnet, dass** der Reibring (8) durch eine Faseranbindung (12) an der Bremstrommel (1) angebunden ist, wobei die Faseranbindung (12) den Reibring (8) einerseits und die Bremstrommel (1) andererseits verbindet.

9. Bremstrommel (1) nach Anspruch 8, **dadurch gekennzeichnet, dass** der Reibring (8) durch eine oder mehrere Haltefasern (13) an den faserverstärkten Kunststoff angebunden ist.

10. Trommelbremseneinrichtung für eine Radbremse eines Fahrzeugs, insbesondere Kraftfahrzeug, mit wenigstens einer Bremstrommel (1) und wenigstens einer in oder an der Bremstrommel (1) verlagerbar angeordneten Bremsbacke, wobei zur Ausführung eines Bremsvorgangs die wenigstens eine Bremsbacke gegen die Bremstrommel (1) pressbar ist, **gekennzeichnet durch** die Ausbildung der Bremstrommel (1) nach einem oder mehreren der Ansprüche 1 bis 9.

## Claims

1. Brake drum (1) for a drum brake, in particular of a motor vehicle, comprising a cylindrical casing (2) and a carrier pot (3) axially adjoining said cylindrical casing, wherein the carrier pot (3) comprises a hub ring portion (4) for fixing to a wheel hub (5), wherein a cylindrical friction ring (8) is arranged on an inner side of the casing (2), **characterized in that** the brake drum (1) formed in one piece is formed at least in part from a fibre-reinforced plastic, wherein the friction ring (8) comprises metallic and/or ceramic components.

2. Brake drum (1) according to Claim 1, **characterized in that** the brake drum (1) is formed entirely from a fibre-reinforced plastic.

3. Brake drum (1) according to Claim 1 or 2, **characterized in that** the brake drum (1) comprises one or more supporting fibres (7) extending in conformity with the load path.

4. Brake drum (1) according to one of the preceding claims, **characterized in that** the brake drum (1) comprises at least one radially inner and at least one radially outer region of the carrier pot (3), wherein the radially inner region is arranged axially offset in relation to the radially outer region, and wherein the carrier pot (3) comprises a transition (9) between the radially inner region and the radially outer region, and wherein the transition (9) has a curvature.

5. Brake drum (1) according to Claim 4, **characterized in that** the curvature has a radius of at least 2 mm, preferably at least 4 mm, particularly preferably at least 6 mm.

6. Brake drum (1) according to one of the preceding claims, **characterized in that** a transition (10), in particular casing transition, from the cylindrical casing (2) into the carrier pot (3) axially adjoining said cylindrical casing has a curvature, and wherein the curvature in particular has a radius of at least 2 mm, preferably at least 4 mm, particularly preferably at least 6 mm.

7. Brake drum (1) according to one of the preceding claims, **characterized in that** the friction ring (8) is enclosed, in particular encapsulated, at least in certain regions by the material of the brake drum (1) for the purpose of embedding said friction ring into the brake drum (1).

8. Brake drum (1) according to one of Claims 1 to 3, **characterized in that** the friction ring (8) is attached to the brake drum (1) by a fibre connection (12), wherein the fibre connection (12) connects the friction ring (8) on the one hand and the brake drum (1) on the other hand.

9. Brake drum (1) according to Claim 8, **characterized in that** the friction ring (8) is attached to the fibre-reinforced plastic by one or more retaining fibres (13).

10. Drum brake apparatus for a wheel brake of a vehicle, in particular a motor vehicle, having at least one brake drum (1) and at least one brake shoe displaceably arranged in or on the brake drum (1), wherein the at least one brake shoe can be pressed against the brake drum (1) in order to perform a braking operation, **characterized by** the formation of the brake drum (1) according to one or more of Claims 1 to 9.

## Revendications

1. Tambour de frein (1) destiné à un frein à tambour, en particulier d'un véhicule automobile, ledit tambour de frein comportant une enveloppe cylindrique (2) et un pot de support (3) raccordé axialement à celle-ci, le pot de support (3) comportant une portion de moyeu annulaire (4) destinée à la fixation à un moyeu de roue (5), une bague de friction cylindrique (8) étant disposée à l'intérieur de l'enveloppe (2), **caractérisé en ce que** le tambour de frein monobloc (1) est au moins partiellement formé à partir d'une matière synthétique renforcée de fibres, la bague de friction (8) comportant des composants métalliques et/ou céramiques.

2. Tambour de frein (1) selon la revendication 1, **caractérisé en ce que** le tambour de frein (1) est formé entièrement à partir d'une matière plastique renforcée de fibres.

3. Tambour de frein (1) selon la revendication 1 ou 2, **caractérisé en ce que** le tambour de frein (1) comporte une ou plusieurs fibres de support (7) s'étendant conformément au chemin de charge.

4. Tambour de frein (1) selon l'une des revendications précédentes, **caractérisé en ce que** le tambour de frein (1) comporte au moins une région radialement intérieure et au moins une région radialement extérieure du pot de support (3), la région radialement intérieure étant disposée de manière décalée axialement de la région radialement extérieure, et le pot de support (3) comportant une transition (9) entre la région radialement intérieure et la région radialement extérieure, et la transition (9) présentant une courbure.

5. Tambour de frein (1) selon la revendication 4, **caractérisé en ce que** la courbure a un rayon d'au moins 2 mm, de préférence d'au moins 4 mm, de manière particulièrement préférée d'au moins 6 mm.

6. Tambour de frein (1) selon l'une des revendications précédentes, **caractérisé en ce qu'**une transition (10), en particulier une transition d'enveloppe, allant de l'enveloppe cylindrique (2) jusque dans le pot de support (3), se raccordant axialement à celle-ci, présente une courbure, et en particulier la courbure ayant un rayon d'au moins 2 mm, de préférence d'au moins 4 mm, de manière particulièrement préférée d'au moins 6 mm.

7. Tambour de frein (1) selon l'une des revendications précédentes, **caractérisé en ce que** la bague de friction (8), destinée à être noyée dans le tambour de frein (1), est enfermée par la matière du tambour de frein (1) au moins par endroits, en particulier enrobée.

8. Tambour de frein (1) selon l'une des revendications 1 à 3, **caractérisé en ce que** la bague de friction (8) est reliée au tambour de frein (1) par une liaison fibreuse (12), la liaison fibreuse (12) reliant la bague de friction (8) d'une part et le tambour de frein (1) d'autre part.

9. Tambour de frein (1) selon la revendication 8, **caractérisé en ce que** la bague de friction (8) est reliée à la matière synthétique renforcée de fibres par une ou plusieurs fibres de retenue (13).

10. Dispositif formant frein à tambour destiné à un frein de roue d'un véhicule, en particulier d'un véhicule automobile, ledit dispositif comprenant au moins un tambour de frein (1) et au moins un sabot de frein disposé de manière déplaçable dans ou sur le tambour de frein (1), l'au moins un sabot de frein pouvant être pressé contre le tambour de frein (1) afin d'effectuer un processus de freinage, **caractérisé en ce que** le tambour de frein (1) est conçu selon une ou plusieurs des revendications 1 à 9.
